# EUROPEAN PATENT SPECIFICATION

(11) **EP 3 967 419 B1**
(45) Date of publication and mention of the grant of the patent: **29.10.2025**
(21) Application number: 20802640.1
(22) Date of filing: 13.03.2020
(51) Int. Cl.: B21D 28/36, B23P 23/04, B23K 26/38, B21D 28/26, B23K 26/00, B23K 26/08, B23K 26/352, B23K 37/02, B23K 37/04

(54) **COMPOSITE WORKING MACHINE**
VERBUNDBEARBEITUNGSMASCHINE
MACHINE D'USINAGE COMPOSITE

(30) Priority: 09.05.2019 JP 2019089258
(43) Date of publication of application: 16.03.2022
(73) Proprietor: Murata Machinery, Ltd., Kyoto-shi, Kyoto 601-8326 (JP)
(72) Inventor: ICHIOKA, Hirokazu, Inuyama-shi, Aichi 484-8502 (JP)
(74) Representative: Hoffmann Eitle
(86) International application number: PCT/JP2020/011006
(87) International publication number: WO 2020/225975

(56) References cited:
- EP-A1- 0 834 377
- EP-A2- 0 412 584
- JP-A- H0 379 249
- JP-A- H04 111 732
- JP-A- H05 192 833
- JP-A- H05 285 785
- JP-A- H1 133 793
- US-A- 4 335 296
- US-A- 4 833 292

## Description

### Technical Field

The present invention relates to a composite working machine.

### Background Art

For example, JP H05-285785 discloses a composite working machine that includes a press mechanism and a laser mechanism. The press mechanism includes a press tool that performs press working such as cutting, boring, or molding on a workpiece by sandwiching the workpiece. The laser mechanism includes a laser head that performs working such as cutting, boring, or marking on a workpiece by emitting a laser beam at the workpiece. This composite working machine includes a press frame that supports the press mechanism and a laser frame that supports the laser mechanism.

### Summary of Invention

### Technical Problem

In the composite working machine mentioned above, the laser head of the laser mechanism is supported by an upper laser frame of the laser frame. Therefore, if the upper laser frame is provided cantilevered, the upper laser frame will become bent due to the load of the laser head and the weight of the upper laser frame itself, and the end thereof will sag downward. If such bending occurs in the upper laser frame, the vertical position of the laser head and the orientation of the laser beam emitted from the laser head will change, resulting in a problem that working cannot be performed on the workpiece at a high level of precision. Meanwhile, while it is possible to increase the rigidity of the upper laser frame, this would result in an increase in the size of the device and in the manufacturing cost of the device.

Furthermore, document US4833292 discloses a compound machining apparatus in which a punch press and a movable table device are provided on separate frames, respectively, and a laser oscillator, a laser beam machining head and a tube for guiding a laser beam from the laser oscillator to the laser beam machining head are collectively placed on the same frame as the frame of the movable table device.

An object of the present invention is to provide a composite working machine that is capable of performing working on a workpiece at a high level of precision by means of a laser head while preventing the upper laser frame from bending and causing the end thereof to sag downward, and that is also capable of suppressing an increase in the manufacturing cost of the device.

### Means for Solving Problem

The present invention is defined by the composite working machine according to independent claim 1. Preferred optional features are recited in the dependent claims.

The laser mechanism may cause the laser head to move in one direction along a longitudinal direction of the upper laser frame, the transporter may cause a workpiece to move in the one direction and in an intersecting direction intersecting the one direction, when working is performed on a workpiece by means of the press mechanism, the transporter may cause the workpiece to move in the one direction and in the intersecting direction, and when working is performed on a workpiece by means of the laser mechanism, the laser head may be moved in the one direction and the transporter may cause the workpiece to move in the intersecting direction.

The engaging part and the engaged part may be arranged in a vertical direction, either one of the engaging part and the engaged part may have a groove in a direction along which the upper laser frame extends, and either of the other of the engaging part and the engaged part may have a protrusion that, in the connected state, enters the groove. The rigidity of the upper press frame may be higher than that of the upper laser frame.

### Advantageous Effects of the Invention

According to the composite working machine mentioned above, an end of the upper laser frame is supported by the upper press frame by bringing the joint into the connected state, and it is, therefore, possible to prevent the end of the upper laser frame from sagging downward. As a result, the vertical position of the laser head and the orientation of the laser beam emitted from the laser head are prevented from being changed, and working can be performed on the workpiece at a high level of precision. Since it is not necessary to increase the rigidity of the upper laser frame, it is possible to suppress an increase in the manufacturing cost of the device while preventing an increase in the size of the upper laser frame (an increase in the size of the device). When the joint is in the separated state, vibrations do not propagate from the upper press frame to the upper laser frame, and it is, therefore, possible to prevent vibrations from being propagated to the laser head when driving the press mechanism.

In a configuration such that the laser mechanism causes the laser head to move in one direction along a longitudinal direction of the upper laser frame, the transporter causes a workpiece to move in the one direction and in an intersecting direction intersecting the one direction, when working is performed on a workpiece by means of the press mechanism, the transporter causes the workpiece to move in the one direction and in the intersecting direction, and when working is performed on a workpiece by means of the laser mechanism, the laser head is moved in the one direction and the transporter causes the workpiece to move in the intersecting direction, the movement of a workpiece made by the transporter can be used when working is performed on the workpiece by the press mechanism as well as when working is performed on the workpiece by the laser mechanism. In a configuration such that the upper press frame and the upper laser frame are arranged so that end sides thereof face each other, the joint has an engaging part and an engaged part that are switched between the connected state and the separated state by moving relatively so as to come into contact with or separate from each other, and one of the engaging part and the engaged part is provided on the upper press frame, and the other is provided on the upper laser frame, the joint can easily switch between the connected state and the separated state, using the engaging part and the engaged part.

In a configuration such that the engaging part and the engaged part are arranged in a vertical direction, either one of the engaging part and the engaged part has a groove in a direction along which the upper laser frame extends, and either of the other of the engaging part and the engaged part has a protrusion that, in the connected state, enters the groove, the engaging part and the engaged part, in the connected state, are allowed to move relatively in the direction along which the upper laser frame extends while being restricted to move relatively in the direction orthogonal thereto, and thermally induced expansion and/or contraction can be allowed to occur in the upper laser frame or the upper press frame. In a configuration such that the composite working machine comprises: a driver that causes the engaging part and the engaged part to move relatively; and a controller that controls the drive of the driver, wherein the controller causes the driver to drive so as to bring the joint in the connected state when working is performed on a workpiece by means of the laser head of the laser mechanism, and causes the driver to drive so as to bring the joint in the separated state when working is performed on a workpiece by means of the press tool of the press mechanism, the controller can prevent vibrations from propagating from the press mechanism to the laser mechanism when working is performed on a workpiece by the press tool, and can prevent the end of the upper laser frame from sagging downward when working is performed on the workpiece by the laser head. In a configuration such that the rigidity of the upper press frame is higher than that of the upper laser frame, it is possible to efficiently prevent the end of the upper laser frame from sagging downward by connecting it to the upper press frame, the rigidity of which is high.

### Brief Description of the Drawings

Fig. 1 is a diagram showing an example of a composite working machine according to the present embodiment, and is a front elevation view as viewed from the X direction.
Fig. 2 is a diagram showing an example of the composite working machine according to the present embodiment, and is a plan view as viewed from the Z direction.
Fig. 3 is an enlarged perspective view showing a joint.
Fig. 4 is a perspective view showing an example of a case where the joint is brought into a connected state.
Fig. 5 is a diagram showing an example of a case where a press mechanism performs working on a workpiece.
Fig. 6 is a diagram showing an example of a case where a laser mechanism performs working on a workpiece.
Fig. 7 shows another example of the joint, wherein Fig. 7 (A) is a perspective view showing a separated state and Fig. 7 (B) is a perspective view showing a connected state.
Fig. 8 shows another example of the joint, wherein Fig. 8 (A) is a perspective view showing a separated state and Fig. 8 (B) is a perspective view showing a connected state.

### Description of Embodiments

The following describes embodiments with reference to the drawings. However, the present invention is not limited to the embodiments. In the drawings, scale is changed as necessary to illustrate the embodiment, such as by enlarging or by emphasizing a part. In the following drawings, an XYZ coordinate system is used to describe directions in each drawing. In the XYZ coordinate system, a vertical direction is taken as a Z direction, and horizontal directions are taken as an X direction and a Y direction. The Y direction is one direction of the horizontal directions, and the X direction is a direction orthogonal to the Y direction. Also, in each of the X, Y, and Z directions, where appropriate, the orientation indicated by the arrow is expressed as a + direction (for example, +X direction), and the direction opposite thereof is expressed as a - direction (for example, -X direction).

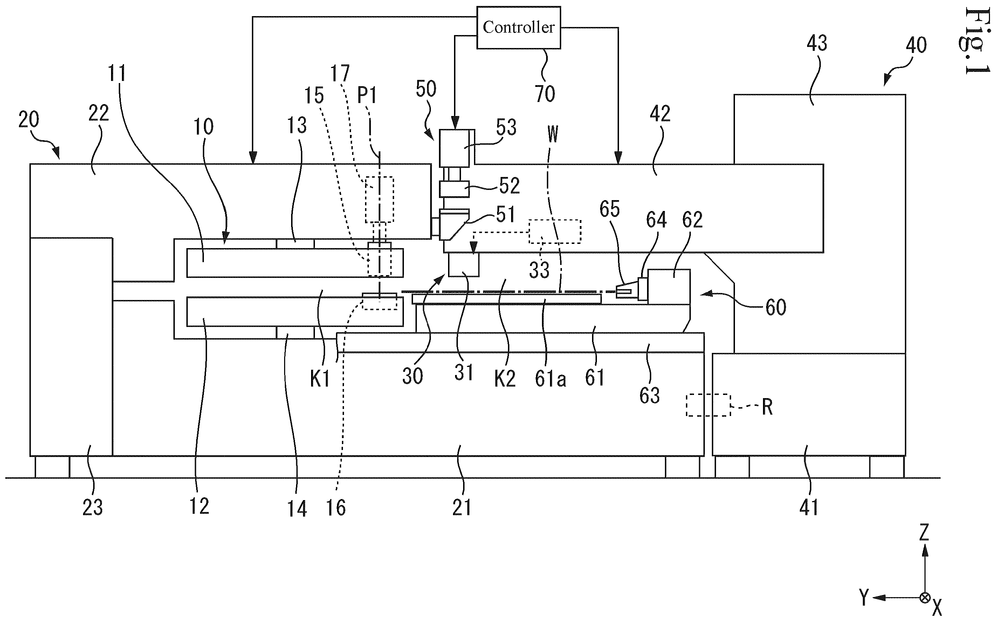

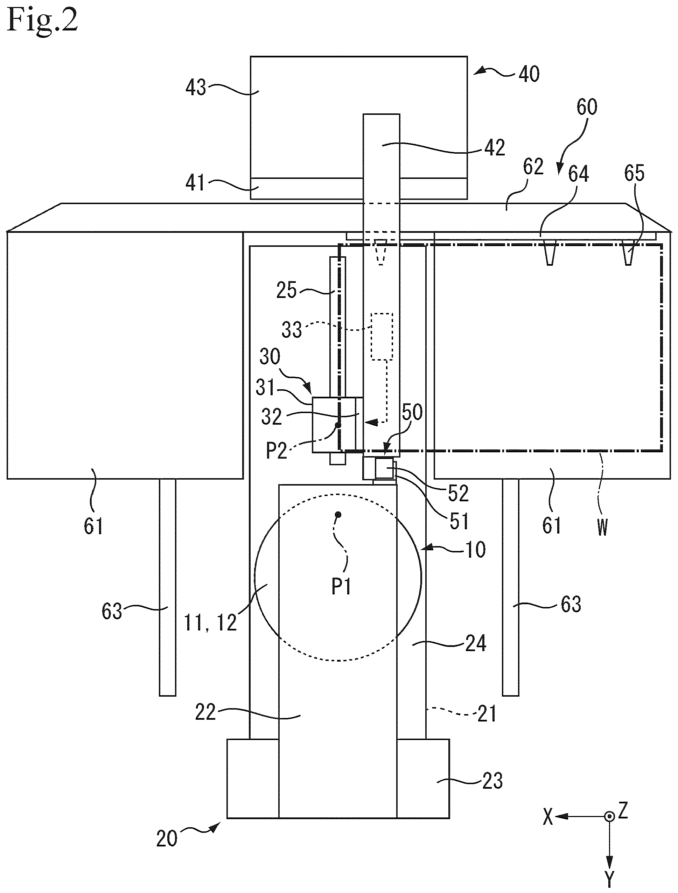

Fig. 1 and Fig. 2 are diagrams showing an example of a composite working machine 100 according to the present embodiment. Fig. 1 is a front elevation view of the composite working machine 100 as viewed from the X direction, and Fig. 2 is a plan view of the composite working machine 100 as viewed from the Z direction. Of the composite working machine 100, for example, the +X side is the front side and the X direction is the front-rear direction. The Y direction is the left-right direction of the composite working machine 100. As shown in Fig. 1 and Fig. 2, the composite working machine 100 includes a press mechanism 10, a press frame 20, a laser mechanism 30, a laser frame 40, a joint 50, a transporter 60, and a controller 70.

The press mechanism 10 is a turret punch press having an upper turret 11 and a lower turret 12. The upper turret 11 is held via a rotation shaft 13 by the upper press frame 22 of the press frame 20. The lower turret 12 is held via a rotation shaft 14 by the lower press frame 21 of the press frame 20. The upper turret 11 and the lower turret are each formed in a disk shape. The upper turret 11 and the lower turret 12 are formed rotatable around a rotation shaft 13 and a rotation shaft 14 respectively by driving a driving device such as a motor not shown in the drawings. The upper turret 11 and the lower turret 12 are arranged so as to face each other.

The upper turret 11 holds upper press tools (press tools) 15 such as punches. A plurality of upper press tools 15 are arranged in line along the circumferential direction around the rotation shaft 13 on the upper turret 11. The lower face side of each upper press tool 15 functions as a blade or a molding portion that performs working on a workpiece W. The upper turret 11 drives the upper press tool 15 in the vertical direction (Z direction). A head 17 that feeds the upper press tool 15 downward is arranged on the upper turret 11.

The lower turret 12 holds lower press tools (press tools) 16 such as dies. A plurality of the lower press tools 16 are arranged in line along the circumferential direction around the rotation shaft 14 on the lower turret 12. The lower press tools 16 are arranged at intervals below the upper press tools 15 (in the -Z direction). Each lower press tool 16 is a member of, for example, a cylindrical or concaved shape the axial direction of which is in the Z direction, and the upper face side thereof functions as a blade or a molding portion that performs working on a workpiece W. The lower press tool 16 may be fixed in the vertical direction (Z direction) when working is performed on the workpiece W, or may be fed upward by a driver not shown in the drawings.

The upper turret 11 and the lower turret 12 are each rotated by a driving device not shown in the drawings, and a pair of upper press tool 15 and lower press tool 16 are selected at a press working position P1. The press mechanism 10 arranges a working target portion, which is a part of the workpiece W, at the press working position P1, the upper press tool 15 is fed downward by the head 17, or the lower press tool 16 is fed upward while the upper press tool 15 is fed downward, and the upper press tool 15 and the lower press tool 16 sandwich the working target portion of the workpiece W therebetween, to thereby perform working such as boring, molding, or cutting on the working target portion of the workpiece W.

The press frame 20 supports the press mechanism 10. The press frame 20 is of a C-shape when viewed from the +X side. The press frame 20 has a lower press frame 21, an upper press frame 22, and a vertical press frame 23. The lower press frame 21 is installed on a floor surface of a building, for example. The lower press frame 21 supports the lower turret 12, which is a part of the press mechanism 10. The upper press frame 22 is located above the lower press frame 21 with a transport space K1 therebetween for a workpiece W transported by the transporter 60. The upper press frame 22 supports the upper turret 11, which is a part of the press mechanism 10. The vertical press frame 23 connects the lower press frame 21 and the upper press frame 22. The upper press frame 22 and the lower press frame 21 are connected and integrated on the +Y side by the vertical press frame 23. The lower press frame 21, the upper press frame 22, and the vertical press frame 23 are configured with, for example, structural materials such as columns and beams, and are formed by attaching panels or the like to the outer face side thereof. As described above, at a time of performing working on the workpiece W, the press frame 20 receives a load that occurs when the working target portion of the workpiece W is sandwiched between the upper press tool 15 and the lower press tool 16, and accordingly, the press frame 20 formed having an increased rigidity. Therefore, the rigidity of the press frame 20 (upper press frame 22) is higher than that of an upper laser frame 42 of the laser frame 40 described later.

The press frame 20 has a fixed table 24, and the fixed table 24 is provided on the lower press frame 21. It should be noted that illustration of the fixed table 24 is omitted in Fig. 1. The fixed table 24 is arranged at a height between the upper turret 11 and the lower turret 12. A brush, a free ball bearing, or the like may be provided on the upper face of the fixed table 24 in order to reduce friction on the lower face side of the workpiece W.

As shown in Fig. 2, the Y-direciton dimension of the fixed table 24 is set to a length such that the vicinity of the connecting portion between the upper press frame 22 and the lower press frame 21 is taken as the +Y side end, and the -Y side of the movable region of the laser head 31 described later is taken as the -Y side end. As shown in Fig. 2, the X-direction dimension of the fixed table 24 is set to a length slightly greater than the diameter of the upper turret 11 (lower turret 12). In the fixed table 24 there is formed a through hole 25 within a range corresponding to the movable region of the laser head 31 described later. The through hole 25 has a predetermined width in the X direction and is provided so as to extend along the Y direction.

The transporter 60 is provided on the lower press frame 21 of the press frame 20. The transporter 60 transports a workpiece W to both the press mechanism 10 and the laser mechanism 30. The transporter 60 includes movable tables 61, an X guide 62, Y guides 63, an X slider 64, and workpiece holders 65. The movable tables 61 are each arranged on the +X side and the -X side of the fixed table 24. The two movable tables 61 are connected to each other on the -Y side, for example, and the movable table 61 on the +X side and the movable table 61 on the -X side can be moved integrally by a driver not shown in the drawings. It should be noted that the movable table 61 on the +X side and the movable table 61 on the -X side may not be connected, and the movable table 61 on the +X side and the movable table 61 on the -X side may be driven at the same time by synchronized drivers each provided therefor. The two movable tables 61 are supported by the Y guides 63 so as to be movable in the Y direction. A friction reducer 61a such as a brush, a free ball bearing, or the like may be provided on the upper face of the movable table 61 in order to reduce friction on the lower face side of the workpiece W (see Fig. 1).

The X guide 62 extends in the X direction and is provided at the +Y side end of the movable table 61. This X guide may connect the movable table 61 on the +X side and the movable table 61 on the -X side. The X guide 62 can move in the Y direction integrally with the movable table 61. The X guide 62 is provided at a position higher than that of the fixed table 23. Therefore, the X guide 62 does not interfere with the fixed table 23 when moving in the Y direction.

The Y guides 63 are provided below the movable table 61 on the +X side and the movable table 61 on the -X side respectively, and each extend in the Y direction. The Y guides 63 guide the movable table 61 on the +X side and the movable table 61 on the -X side respectively in the Y direction. The Y guides 63 are provided on the lower press frame 21, however, are not necessarily limited to this configuration and may be provided on the floor surface on which the composite working machine 100 is installed.

The X slider 64 is provided on the +Y side of the X guide 62. The X slider 64 can be moved in the X direction along the X guide 62 by means of a driver not shown in the drawings. The X slider 64 includes a plurality (three in the present embodiment) of workpiece holders 65. Each workpiece holder 65 is arranged on the -Y side of the X slider 64. The plurality of workpiece holders 65 are arranged at predetermined intervals in the X direction, and grip a +Y side end of the workpiece W. The workpiece holders 65 may be movable in the X direction with respect to the X slider 64.

The workpiece W gripped by the workpiece holders 65 can move in the X direction and the Y direction (horizontal directions) as the X guide 62 moves in the Y direction together with the movable tables and the X slider 64 moves in the X direction with respect to the X guide 62.

The driving of each part of the press mechanism 10 (for example, the rotation of the upper turret 11 and the lower turret 12, the driving of the upper press tool 15 and the lower press tool 16, the movement of the movable tables 61 of the transporter 60, and the movement of the X slider 64) is controlled by the controller 70. The driving of each part of the press mechanism 10 is not limited to being controlled by the controller 70. The operator may manually perform operations, that is to say, for example, the operator may rotate the upper turret 11 and the lower turret 12 where appropriate or may cause the movable tables 61 and the X slider 64 of the transporter 60 to drive where appropriate.

The laser frame 40 has a lower laser frame 41, an upper laser frame 42, and a vertical laser frame 43. The lower laser frame 41 is installed on the floor surface. The upper laser frame 42 is located above the lower laser frame 41 with a transport space K2 therebetween for a workpiece W transported by the transporter 60. The vertical laser frame 43 connects the lower laser frame 41 and the lower laser frame 42. The vertical laser frame 43 supports the -Y side of the upper laser frame 42. That is to say, the upper laser frame 42 is cantileveredly supported by the vertical laser frame 43. The upper laser frame 42 extends in the +Y direction from an upper part of the vertical laser frame 43 toward the upper laser frame 22 side while being spaced from the press frame 20 (upper press frame 22). The lower laser frame 41, the upper laser frame 42, and the vertical laser frame 43 are configured with, for example, structural materials such as columns and beams, and are formed by attaching panels or the like to the outer face side thereof. The Y-direction dimension of the upper laser frame 42 is set to a length that ensures the movement of the laser head 31 in the Y direction.

The upper laser frame 42 supports the laser mechanism 30 and includes a Y guide not shown in the drawings that guides the laser head 31 in the Y direction. Since the upper laser frame 42 only needs to support the laser mechanism 30, the level of rigidity as in the upper press frame 22 mentioned above is not required. Therefore, the rigidity of the upper laser frame is lower than that of the upper press frame 22. However, the upper laser frame 42 may be formed so as to have a rigidity higher than or equal to that of the upper press frame 22. The upper press frame 22 and the upper laser frame 42 are arranged so that end sides thereof face each other. The lower press frame 21 and the lower laser frame 41 may be connected by means of a fastener R such as a bolt (see Fig. 1).

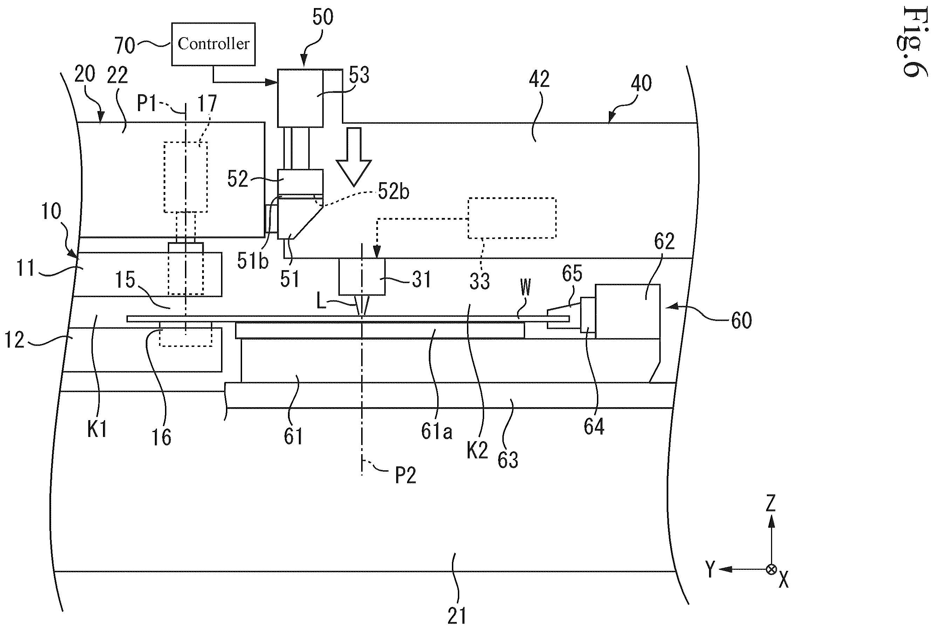

The laser mechanism 30 has a laser head 31, a Y slider 32, and a head driver 33. The laser head 31 is supported via the Y slider 32 so as to be able to move in the Y direction with respect to the upper laser frame 42. The laser head 31 is connected, via an optical transmission line such as an optical fiber not shown in the drawings, to a laser light source not shown in the drawings installed on the floor surface or on the laser frame 40. As the laser light source, for example, a carbon dioxide gas laser light source, a solid-state laser light source, or the like is used. The laser head 31 can emit a laser beam L, which is transmitted from the laser light source (see Fig. 6), downward (in the -Z direction).

The Y slider 32 is provided between the upper laser frame 42 and the laser head 31. The Y slider 32 is supported so as to be able to move in the Y direction with respect to the upper laser frame 42, and moves integrally with the laser head 31 in the Y direction. That is to say, the laser mechanism 30 can cause the laser head 31 to move in one direction (Y direction) along the longitudinal direction of the upper laser frame 42. The laser mechanism 30 is not limited to a configuration in which the laser head 31 is moved in one direction, but may also be fixed at a predetermined position of the upper laser frame 42 in the Y direction in which the laser head 31 can move. The Y slider 32 includes a Z guide not shown in the drawings that supports the laser head 31 so as to be movable in the vertical direction (Z direction).

The head driver 33 causes the laser head 31 and the Y slider 32 to move along the upper laser frame 42 of the laser frame 40 in one direction (Y direction) along the longitudinal direction of the upper laser frame 42. Therefore, the position of the laser beam L emitted from the laser head 31 (laser working position P2) moves in the Y direction as the laser head 31 moves. The head driver 33 raises or lowers the laser head 31 along the Z guide not shown in the drawings of the Y slider 32 (moves the laser head 31 in the Z direction), so as to be able to adjust the distance between the laser head 31 and the workpiece W. The head driver 33 uses a configuration using an electric motor such as a ball screw mechanism or a linear motor mechanism to cause the laser head 31 to move in the Y direction or in the Z direction. The head driver 33 may be provided on the upper laser frame 42 of the laser frame 40, or may be provided outside the upper laser frame 42 (for example, on the lower laser frame 41 or the vertical laser frame 43 of the laser frame 40).

The laser mechanism 30 is controlled by the controller 70, and outputs a laser beam L at a predetermined output from the laser head 31 to the workpiece W, to thereby perform laser working (working such as boring, cutting, or marking) on the workpiece W. The workpiece W is cut in a desired shape by means of the movement of the laser working position P2 on the horizontal plane made as a result of the laser head 31 moving in one direction (Y direction) along the longitudinal direction of the upper laser frame 42, and the X slider 64 holding the workpiece W moving in the X direction (the intersecting direction that intersects with the one direction along the longitudinal direction of the upper laser frame 42). For example, the laser mechanism 30 performs laser working in a manner such that when the laser head 31 emits the laser beam L, a jet of an assist gas is simultaneously discharged downward to blow the molten material of the workpiece W produced by the laser beam L off into the through hole 25 below the workpiece W.

The driving of each part of the laser mechanism 30 (for example, emission of the laser beam L from the laser head 31 and the driving of the head driver 33) is controlled by the controller 70. The driving of each part of the laser mechanism 30 is not limited to being controlled by the controller 70. The operator may manually perform operations, that is to say, for example, the operator may move the laser head 31 where appropriate.

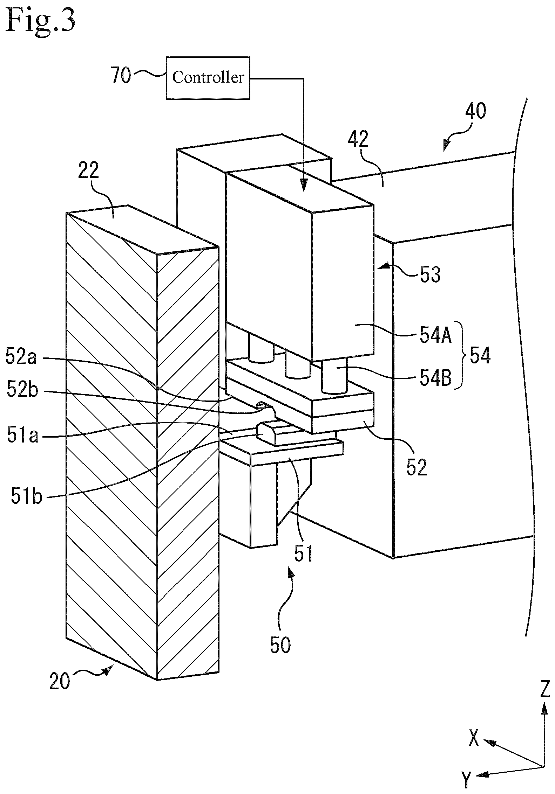

The joint 50 has an engaging part (a receiver 51 in the present embodiment) and an engaged part (a mover 52 in the present embodiment) that are switched by moving relatively so as to come into contact with or separate from each other, between the connected state where the upper press frame 22 and the end of the upper laser frame 42 are connected, and the separated state where the connection therebetween is released. Fig. 3 is an enlarged perspective view showing the joint 50. As shown in Fig. 1 to Fig. 3, the joint 50 has the receiver 51, which is an engaging part, a mover 52, which is an engaged part, and a driver 53. Fig. 3 shows a part of the upper press frame 22 being cut out.

The receiver 51 is provided on either the upper press frame 22 or the upper laser frame 42. The mover 52 is provided on either of the other of the upper press frame 22 and the upper laser frame 42. In the present embodiment, the receiver 51 is provided on the -Y side end face of the upper press frame 22, and the mover 52 is provided on the +Y side end face of the upper laser frame 42. However, the receiver 51 and the mover 52 are not limited to the configuration described in this embodiment, that is to say, the receiver 51 may be provided on the +Y side end face of the upper laser frame 42 and the mover 52 may be provided on the -Y side end face of the upper press frame 22. In such a case, the vertical positional relationship between the receiver 51 and the mover 52 is reversed.

The mover 52 is attached to the lower end of the driver 53 and is arranged above the receiver 51. That is to say, the receiver 51 and the mover 52 are arranged in the vertical direction. In the present embodiment, the receiver 51 is arranged on the lower side, and the mover 52 is arranged on the upper side. However, the receiver 51 and the mover 52 are not limited to the configuration described in this embodiment, that is to say, the receiver 51 may be arranged on the upper side and the mover 52 may be arranged on the lower side. In such a case, the receiver 51 is provided on the upper laser frame 42 and the mover 52 is provided on the upper press frame 22. The mover 52 can be moved by the driver 53 between a position at which it comes in contact with the receiver 51 and a position at which it is spaced from the receiver 51.

The joint 50 is brought into the connected state by moving the mover 52 and by bringing the receiver 51 and the mover 52 into contact with each other, and is brought into the separated state by separating the receiver 51 and the mover 52. An upper face 51a of the receiver 51 and a lower face 52a of the mover 52 face each other. Both the upper face 51a and the lower face 52a are of a planar shape. A protrusion 51b is provided on the upper face 51a of the receiver 51. The protrusion 51b is provided so as to protrude from the upper face 51a in the +Z direction and extend in the Y direction. A groove 52b is provided in the lower face 52a of the mover 52. The groove 52b is provided so as to depress in the -Z direction from the lower face 52a and extend in the Y direction (in one direction along the longitudinal direction of the upper laser frame 42). The protrusion 51b and the groove 52b are both arranged in a manner so that the protrusion 51b enters the groove 52b in the connected state.

The driver 53 causes the mover 52 to move. As the driver 53, for example, a hydro-pneumatic cylinder 54 such as an air cylinder device or a hydraulic cylinder device is used. The hydro-pneumatic cylinder 54 has a cylinder main body 54A and cylinder rods 54B. The cylinder main body 54A is fixed on the +Y side end face of the upper laser frame 42. The cylinder rods 54B each project downward (in the -Z direction) from the cylinder chamber 54A. The cylinder rods 54B move in the vertical direction according to the pressure of the fluid flowing in or out of the cylinder main body 54A. The mover 52 is fixed on the lower end of the cylinder rods 54B, and is raised or lowered by the vertical movement of the cylinder rods 54B.

In the present embodiment, as described above, the hydro-pneumatic cylinder 54 is used as the driver 53. In the present embodiment, the pressure of the fluid used to drive the hydro-pneumatic cylinder 54 is used to bear some of the load on the +Y side of the upper laser frame 42. With such a configuration, some of the load on the +Y side of the upper laser frame 42 can be borne reliably.

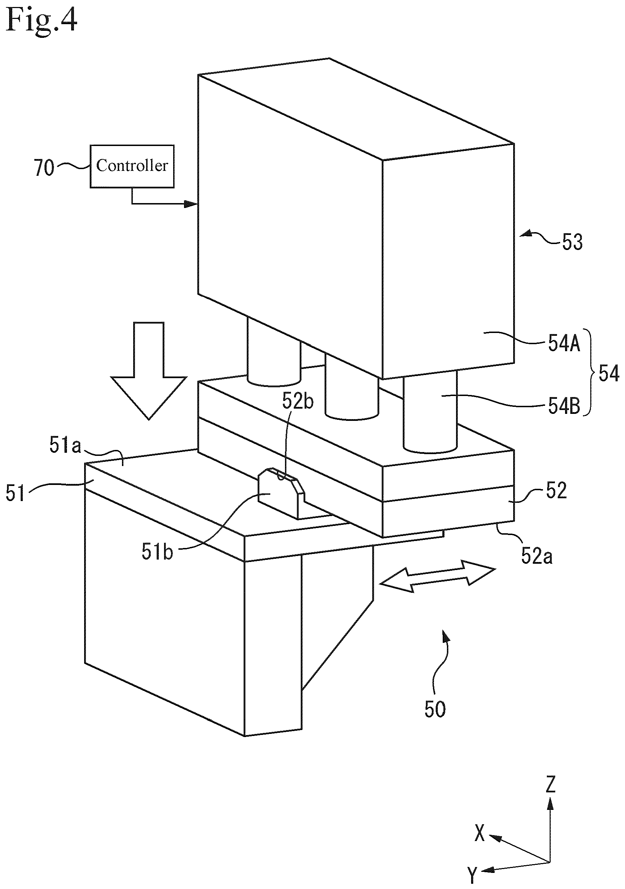

Fig. 4 is a perspective view showing an example of a case where the joint 50 is brought into the connected state. As shown in Fig. 4, in the joint 50, the mover 52 moves downward and comes into contact with the receiver 51 in the connected state. In such a configuration, the mover 52 on the upper laser frame 42 side is placed from above on the receiver 51 on the upper press frame 22 side. Therefore, the +Y side end of the upper laser frame 42 is supported via the joint 50 by the -Y side end of the upper press frame 22. As a result, it is possible to prevent the +Y side end of the upper laser frame 42 from sagging downward. In the present embodiment, the rigidity of the upper press frame 22 is higher than that of the upper laser frame 42. Therefore, it is possible to efficiently prevent the upper laser frame 42 from sagging downward by connecting it to the upper press frame 22, the rigidity of which is high.

As shown in Fig. 4, the joint 50 is in a state where the protrusion 51b has entered the groove 52b in the connected state. As a result, the receiver 51 and the mover 52 can move relatively in the Y direction, along which the upper laser frame 42 extends (in one direction along the longitudinal direction of the upper laser frame 42), while being restricted to move relatively in the X direction, which is orthogonal thereto. Therefore, it is possible to allow thermally induced expansion and/or contraction to occur in the upper laser frame 42 or the upper press frame 22, while preventing the +Y side end of the upper laser frame 42 from sagging downward.

It should be noted that the surfaces of the protrusion 51b and the groove 52b may be subjected to a surface treatment to reduce friction therebetween. The invention is not limited to the configuration in which the protrusion 51b is provided on the receiver 51 and the groove 52b in the mover 52, and a recess may be provided in the receiver 51 and a protrusion on the mover 52. The protrusion 51b and the groove 52b are not limited to being each provided as a single constituent, and may each be provided as a plurality of constituents.

The driving of the driver 53 of the joint 50 (the switching between the connected state and the separated state) is controlled by the controller 70. The controller 70 may drive the driver 53 of the joint 50 to switch between the connected state and the separated state, for example, between when performing press working on a workpiece W by means of the press mechanism 10 and when performing laser working on a workpiece W by means of the laser mechanism 30. For example, the controller 70 may execute the switching automatically, that is to say, the controller 70 may bring the joint 50 into the separated state when performing press working on a workpiece W by means of the press mechanism 10, and may bring the joint 50 into the connected state when performing laser working on the workpiece W by means of the laser mechanism 30. The driving of the driver 53 is not limited to being controlled by the controller 70, and the operator may manually operate to perform the driving of the driver 53.

Next, operations of the composite working machine 100 according to the embodiment will be described. First, a workpiece W is transported into the composite working machine 100. The workpiece W is placed on the fixed table 23 and the movable tables 61 when being transported into the composite working machine 100. The workpiece W may be transported from the outside by a transporter or the like not shown in the drawings. Subsequently, the -Y side end of the workpiece W is gripped by the workpiece holders 65.

Here is described a case where press working is performed on the workpiece W in this state by means of the press mechanism 10. This press working is performed under the control of the controller 70 on the basis of a machining program, for example. First, the controller 70 causes the movable table 61 (X guide 62) and the X slider 64 to move the workpiece W in the horizontal direction, and arranges (positions) the working target portion of the workpiece W at the press working position P1. That is to say, when performing working on the workpiece W by means of the press mechanism 10, the workpiece W is moved by the transporter 60 in one direction (Y direction) along the longitudinal direction of the upper laser frame 42 and in the intersecting direction (X direction) intersecting the one direction (Y direction), to arrange the working target portion of the workpiece W at the press working position P1. At the same time as or before moving the workpiece W, the controller 70 rotates the upper turret 11 and the lower turret 12, selects both the upper press tool 15 and the lower press tool 16 to be used for press working, and arrange them at the press working position P1.

Subsequently, the controller 70 lowers the head 17 and feeds the upper press tool 15 downward. Through this operation, the working target portion of the workpiece W is sandwiched by the upper press tool 15 and the lower press tool 16, and press working (working such as boring, molding, or cutting) is executed on the working target portion of the workpiece W. By repeating such a series of operations, press working is performed on a plurality of locations on the workpiece W.

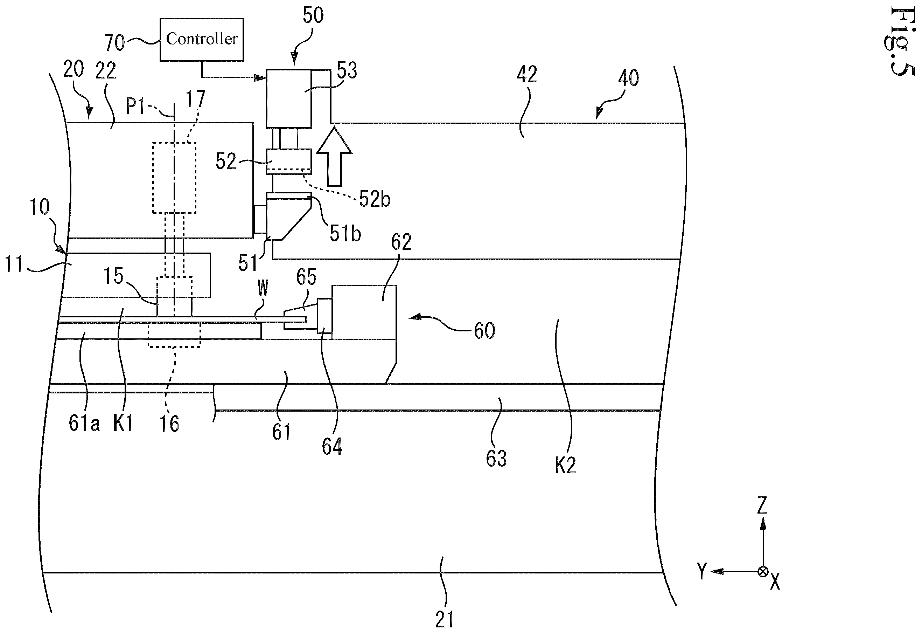

Fig. 5 is a diagram showing an example of a case where the press mechanism 10 performs working on a workpiece W. It should be noted that illustration of the laser head 31 is omitted in Fig. 5. When performing press working on the workpiece W by means of the press mechanism 10, the controller 70 brings the joint 50 into the separated state as shown in Fig. 5. The controller 70 controls the driver 53 so that the mover 52 separates from the receiver 51. As a result, the upper laser frame 42 and the upper press frame 22 are separated from each other. Therefore, it is possible to prevent vibrations caused by the press working performed by the press mechanism 10 from propagating to the upper laser frame 42 via the upper press frame 22.

Next, here is described a case where laser working is performed on a workpiece W by means of the laser mechanism 30. First, the controller 70 controls the movable table 61 (X guide 62) so that the workpiece W is arranged on the -Y side. The controller 70 sets both the Y direction position of the laser head 31 and the position of the X slider 64 holding the workpiece W, so as to arrange (position) the starting point of the cutting location of the workpiece W at the laser working position P2. The controller 70 may adjust the distance (distance in the Z direction) between the workpiece W and the laser head 31. Subsequently, the controller 70 causes the laser head 31 to move in the Y direction and the X slider 64 to transfer the workpiece W in the X direction while emitting from the laser head 31 the laser beam L at a predetermined output. That is to say, when performing working on a workpiece W by means of the laser mechanism 30, the laser head 31 is moved in one direction (Y direction) along the longitudinal direction of the upper laser frame 42 and the workpiece W is moved by the transporter 60 in the intersecting direction (X direction) intersecting with the one direction (Y direction), to perform laser working on the working target portion of the workpiece W.

For example, on the basis of a machining program (NC data) preliminarily stored in a memory storage device or the like not shown in the drawings, the controller 70 moves the workpiece W in the X direction (intersecting direction) by means of the X slider 64 and moves the laser head 31 in the Y direction (one direction) while emitting the laser beam L, to thereby execute laser working (working such as boring, cutting, or marking) on the working target portion of the workpiece W. By repeating such a series of operations, laser working is performed on a plurality of locations on the workpiece W. In the case where the position of the laser head 31 (laser working position P2) is fixed in the Y direction, laser working can be performed by means of the laser head 31, by moving the workpiece W in one direction (Y direction) along the longitudinal direction of the upper laser frame 42 and in the intersecting direction (X direction) intersecting with the one direction using the transporter 60, and appropriately arranging the working target portion of the workpiece W at the laser working position P2.

Fig. 6 is a diagram showing an example of a case where the laser mechanism 30 performs working on a workpiece **W.** When performing laser working on a workpiece W by means of the laser mechanism 30, the controller 70 brings the joint 50 into the connected state as shown in Fig. **6****.** The controller 70 controls the driver 53 so that the mover 52 comes in contact with the receiver 51. As a result, the recess 51 and the mover 52 are connected in a state where the protrusion 51b of the recess 51 has entered the groove 52b of the mover 52. Therefore, the upper laser frame 42 is supported by the upper press frame 22, and it is possible to prevent the + Y side end of the upper laser frame 42 from sagging downward.

After the laser working described above, the controller 70 may perform press working (for example, an edge treatment to perform molding on the cut portion after the laser working) again by means of the press mechanism 10. After the press working performed by the press mechanism 10 described above or after the laser working performed by the laser mechanism 30 described above, the workpiece W may be transported to the outside by a transporter or the like not shown in the drawings.

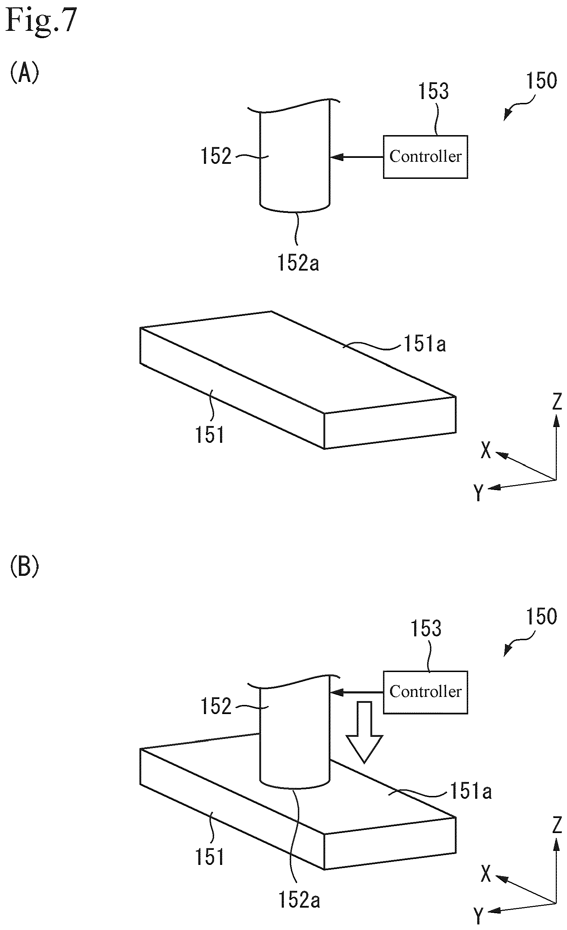

Fig. 7 shows another example of the joint, wherein Fig. 7 (A) is a perspective view showing a separated state and Fig. 7 (B) is a perspective view showing a connected state. A joint 150 shown in Fig. 7 (A) and Fig. 7 (B) has a receiver 151, which is an engaging part, a mover 152, which is an engaged part, and a driver 153. The receiver 151 has a planar upper face 151a. The mover 152 is provided in a columnar or cylindrical shape and extends in the vertical direction (Z direction). In contrast with the joint 50 described above, the joint 150 does not have configurations corresponding to the groove 52b and the protrusion 51b. The driver 153 raises or lowers (vertically moves) the mover 152.

In the separated state as shown in Fig. 7 (A), the joint 150 is in a state where the mover 152 is separated from the receiver 151. In the connected state as shown in Fig. 7 (B), the lower end 152a of the mover 152 is in contact with the upper face 151a of the receiver 151. Accordingly, the end of the upper laser frame 42 is supported by the upper press frame 22 by bringing the joint 150 into the connected state, and it is, therefore, possible to prevent the end of the upper laser frame 42 from sagging downward. Also, by bringing the joint 150 into the separated state, propagation of vibrations from the upper press frame 22 to the upper laser frame 42 can be prevented.

In the joint 150, the receiver 151 and the mover 152 can move relatively within the XY plane (within the horizontal plane) in the connected state. Therefore, in the joint 150, in the connected state, the relative movement of the upper press frame 22 and the upper laser frame 42 in the horizontal plane can be allowed, while preventing the end of the upper laser frame 42 from sagging downward. The lower end 152a of the mover 152 and the upper face 151a of the receiver 151 may be treated with a surface treatment to reduce friction between them. Moreover, for example, a free ball bearing or the like may be provided at the lower end 152a of the mover 152, so that the receiver 151 and the mover 152 can easily move relatively in the connected state.

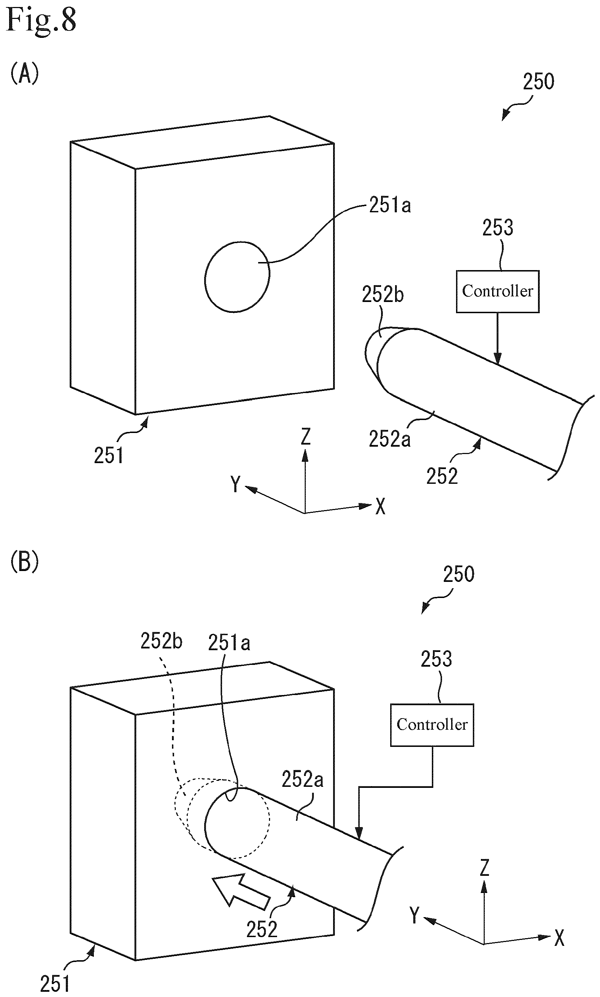

Fig. 8 shows another example of the joint, wherein Fig. 8 (A) is a perspective view showing a separated state and Fig. 8 (B) is a perspective view showing a connected state. A joint 250 shown in Fig. 8 (A) and Fig. 8 (B) has a receiver 251, which is an engaging part, a mover 252, which is an engaged part, and a driver 253. In the joint 250, the receiver 251 has a hole 251a provided in either the upper press frame 22 or the upper laser frame 42. The mover 252 has a rod 252a that is provided on either of the other of the upper press frame 22 and the upper laser frame 42 and that can be inserted into the hole 251a. The hole 251a and the rod 252a are arranged in the horizontal direction (for example, in the Y direction). The driver 253 moves the rod 252a in the horizontal direction (for example, in the Y direction).

In the separated state as shown in Fig. 8 (A), in the joint 250, the rod 252a is arranged outside the hole 251a, thereby bringing the receiver 251 and the mover 252 into a state of being separated from each other. In the connected state as shown in Fig. 8 (B), a distal end 252b of the rod 252a enters the hole 251a, thereby bringing the mover 252 in contact with the receiver 251. The distal end 252b is provided in a tapered shape so as to facilitate the entry to the hole 251a.

Thus, as a result of bringing the joint 250 into the connected state, the -Z side of the rod 252a is received by the -Z side of the hole 251a, and the end of the upper laser frame 42 is supported by the upper press frame 22 via the joint 250. Therefore, it is possible to prevent the end of the upper laser frame 42 from sagging downward. Also, by bringing the joint 250 into the separated state, propagation of vibrations from the upper press frame 22 to the upper laser frame 42 can be prevented.

In the joint 250, in the connected state, the hole 251a and the rod 252a can move relatively in one of the horizontal directions (for example, the Y direction). Therefore, in the joint 250, in the connected state, the relative movement of the upper press frame 22 and the upper laser frame 42 in one of the horizontal directions can be allowed, while preventing the end of the upper laser frame 42 from sagging downward.

As described above, according to the composite working machine 100 of the present embodiment, the end of the upper laser frame 42 is supported by the upper press frame 22 by bringing the joint 50, 150, or 250 into the connected state, and it is, therefore, possible to prevent the end of the upper laser frame 42 from sagging downward. As a result, the vertical position of the laser head 31 and the orientation of the laser beam L emitted from the laser head 31 are prevented from being changed, and working can be performed on a workpiece W at a high level of precision. Since it is not necessary to increase the rigidity of the upper laser frame 42, it is also possible to suppress an increase in the size and the manufacturing cost of the composite working machine 100 (upper laser frame 42). Moreover, by bringing the joint 50 into the separated state, propagation of vibrations from the upper press frame 22 to the upper laser frame 42 can be prevented. As a result, it is possible to prevent damage to or positional deviation of each member of the laser mechanism 30 associated with vibrations.

The technical scope of the present invention is not limited to the mode described in the above embodiment, but by the appended claims. One or more of the requirements described in the above embodiments may be omitted in some cases. One or more of the requirements described in the above embodiments may be appropriately combined. For example, in the above embodiment, the configuration has been described as an example in which the mover 52 moves with respect to the fixed receiver 51, however, the invention is not limited to this configuration. For example, there may be applied a configuration in which both the receiver 51 and the mover 52 are provided so as to be relatively movable, they each move in directions of separating from each other in the separated state, and they each move in directions of approaching each other in the connected state.

### Description of Reference Signs

K1, K2: Transport space
L: Laser beam
P1: Press working position
P2: Laser working position
W: Workpiece
10: Press mechanism
15: Upper press tool (press tool)
16: Lower press tool (press tool)
20: Press frame
21: Lower press frame
22: Upper press frame
23: Vertical press frame
30: Laser mechanism
31: Laser head
33: Head driver
40: Laser frame
41: Lower laser frame
42: Upper laser frame
43: Vertical laser frame
50, 150, 250: Joint
51, 151, 251: Receiver (engaging part)
51a: Upper face
51b: Protrusion
52, 152, 252: Mover (engaged part)
52a: Lower face
52b: Groove
53, 153, 253: Driver
60: Transporter
70: Controller
100: Composite working machine
251a: Hole (engaging part)
252a: Rod (engaged part)

## Claims

1. A composite working machine (100) comprising:
a press mechanism (10) that includes a press tool (15, 16) for performing working on a workpiece; a press frame (20) that supports the press mechanism (10); a laser mechanism (30) that includes a laser head (31) for performing working on a workpiece; a laser frame (40) that supports the laser mechanism (30); a transporter (60) that transports a workpiece to both the press mechanism (10) and the laser mechanism (30); a driver (53, 153, 253) that causes the engaging part (51, 151, 251) and the engaged part (52, 152, 252) to move relatively; and a controller (70) that controls the drive of the driver (53, 153, 253), wherein
the press frame (20) has a lower press frame (21), an upper press frame (22) that is located above the lower press frame (21) with a transport space (K1, K2) therebetween for a workpiece transported by the transporter (60), and that supports at least a part of the press mechanism (10), and a vertical press frame (23) that connects the lower press frame (21) and the upper press frame (22);
the laser frame (40) has a lower laser frame (41), an upper laser frame (42) that is located above the lower laser frame (41) with a transport space (K1, K2) therebetween for a workpiece transported by the transporter (60), and that supports a part of the laser mechanism (30), and a vertical laser frame (43) that connects the lower laser frame (41) and the upper laser frame (42);
a transport space (K1, K2) for a workpiece in the press frame (20) and a transport space (K1, K2) for the workpiece in the laser frame (40) communicate with each other; and
the upper laser frame (42) further comprises a joint (50, 150, 250) that is arranged so as to extend from the vertical laser frame (43) toward the upper press frame (22) side while being spaced from the upper press frame (22), and that switches between a connected state where an end of the upper press frame (22) and the upper laser frame (42) are connected and a separated state where the connection therebetween is released,
wherein
the upper press frame (22) and the upper laser frame (42) are arranged so that end sides thereof face each other,
the joint (50, 150, 250) has an engaging part (51, 151, 251) and an engaged part (52, 152, 252) that are switched between the connected state and the separated state by moving relatively so as to come into contact with or separate from each other, and
one of the engaging part (51, 151, 251) and the engaged part (52, 152, 252) is provided on the upper press frame (22), and the other is provided on the upper laser frame (42), and
wherein
the controller (70)
causes the driver (53, 153, 253) to drive so as to bring the joint (50, 150, 250) in the connected state when working is performed on a workpiece by means of the laser head (31) of the laser mechanism (30), and
causes the driver (53, 153, 253) to drive so as to bring the joint (50, 150, 250) in the separated state when working is performed on a workpiece by means of the press tool (15, 16) of the press mechanism (10).

2. The composite working machine according to claim **1,** wherein
the laser mechanism (30) causes the laser head (31) to move in one direction along a longitudinal direction of the upper laser frame (42),
the transporter (60) causes a workpiece to move in the one direction and in an intersecting direction intersecting the one direction,
when working is performed on a workpiece by means of the press mechanism (10), the transporter (60) causes the workpiece to move in the one direction and in the intersecting direction, and
when working is performed on a workpiece by means of the laser mechanism (30), the laser head (31) is moved in the one direction and the transporter (60) causes the workpiece to move in the intersecting direction.

3. The composite working machine according to claim 1 **or 2,** wherein
the engaging part (51, 151, 251) and the engaged part (52, 152, 252) are arranged in a vertical direction,
either one of the engaging part (51, 151, 251) and the engaged part (52, 152, 252) has a groove (52b) in a direction along which the upper laser frame (42) extends, and
either of the other of the engaging part (51, 151, 251) and the engaged part (52, 152, 252) has a protrusion (51b) that, in the connected state, enters the groove (52b).

4. The composite working machine according to any one of claims 1 to 3, wherein
the rigidity of the upper press frame (22) is higher than that of the upper laser frame (42).

## Patentansprüche

1. Verbundwerkstoff-Bearbeitungsmaschine (100), umfassend:
einen Pressmechanismus (10), der ein Presswerkzeug (15, 16) zum Durchführen einer Bearbeitung an einem Werkstück; einen Pressrahmen (20), der den Pressmechanismus (10) trägt; einen Lasermechanismus (30), der einen Laserkopf (31) zum Durchführen einer Bearbeitung an einem Werkstück einschließt; einen Laserrahmen (40), der den Lasermechanismus (30) trägt; einen Transporter (60), der ein Werkstück sowohl zu dem Pressmechanismus (10) als auch zu dem Lasermechanismus (30) transportiert; einen Treiber (53, 153, 253), der bewirkt, dass sich das eingreifende Teil (51, 151, 251) und das Eingriffsteil (52, 152, 252) relativ bewegen; und eine Steuereinheit (70), die den Antrieb des Treibers (53, 153, 253) steuert, einschließt, wobei
der Pressrahmen (20) einen unteren Pressrahmen (21), einen oberen Pressrahmen (22), der sich über dem unteren Pressrahmen (21) befindet, mit einem dazwischen liegenden Transportraum (K1, K2) für ein vom Transporter (60) transportiertes Werkstück, und der mindestens einen Teil des Pressmechanismus (10) trägt, und einen vertikalen Pressrahmen (23), der den unteren Pressrahmen (21) und den oberen Pressrahmen (22) verbindet, aufweist;
der Laserrahmen (40) einen unteren Laserrahmen (41), einen oberen Laserrahmen (42), der sich über dem unteren Laserrahmen (41) befindet, mit einem dazwischen liegenden Transportraum (K1, K2) für ein vom Transporter (60) transportiertes Werkstück, und der einen Teil des Lasermechanismus (30) trägt, und einen vertikalen Laserrahmen (43), der den unteren Laserrahmen (41) und den oberen Laserrahmen (42) verbindet, aufweist;
ein Transportraum (K1, K2) für ein Werkstück im Pressrahmen (20) und ein Transportraum (K1, K2) für das Werkstück im Laserrahmen (40) miteinander in Verbindung stehen; und
der obere Laserrahmen (42) weiter ein Gelenk (50, 150, 250) umfasst, das angeordnet ist, um sich von dem vertikalen Laserrahmen (43) in Richtung zu der Seite des oberen Pressrahmens (22) zu erstrecken, während es von dem oberen Pressrahmen (22) beabstandet ist, und das zwischen einem verbundenen Zustand, in dem ein Ende des oberen Pressrahmens (22) und des oberen Laserrahmens (42) verbunden sind, und einem getrennten Zustand, in dem die Verbindung zwischen ihnen gelöst ist, umschaltbar ist,
wobei
der obere Pressrahmen (22) und der obere Laserrahmen (42) so angeordnet sind, dass Endseiten davon einander zugewandt sind,
das Gelenk (50, 150, 250) ein eingreifendes Teil (51, 151, 251) und ein Eingriffsteil (52, 152, 252) aufweist, die durch relative Bewegung zwischen dem verbundenen Zustand und dem getrennten Zustand geschaltet werden, um miteinander in Kontakt zu kommen oder voneinander getrennt zu werden, und
eines von dem eingreifenden Teil (51, 151, 251) und dem Eingriffsteil (52, 152, 252) am oberen Pressrahmen (22) bereitgestellt ist und das andere am oberen Laserrahmen (42) bereitgestellt ist, und
wobei
die Steuereinheit (70)
bewirkt, dass der Treiber (53, 153, 253) angetrieben wird, um das Gelenk (50, 150, 250) in den verbundenen Zustand zu bringen, wenn mittels des Laserkopfes (31) des Lasermechanismus (30) eine Bearbeitung an einem Werkstück durchgeführt wird, und
bewirkt, dass der Treiber (53, 153, 253) angetrieben wird, um das Gelenk (50, 150, 250) in den getrennten Zustand zu bringen, wenn mittels des Presswerkzeugs (15, 16) des Pressmechanismus (10) eine Bearbeitung an einem Werkstück durchgeführt wird.

2. Verbundwerkstoff-Bearbeitungsmaschine nach Anspruch 1, wobei
der Lasermechanismus (30) bewirkt, dass sich der Laserkopf (31) in einer Richtung entlang einer Längsrichtung des oberen Laserrahmens (42) bewegt,
der Transporter (60) bewirkt, dass sich ein Werkstück in der einen Richtung und in einer die eine Richtung schneidenden Richtung bewegt,
wenn eine Bearbeitung an einem Werkstück mittels des Pressmechanismus (10) durchgeführt wird, der Transporter (60) bewirkt, dass sich das Werkstück in der einen Richtung und in der schneidenden Richtung bewegt, und
wenn eine Bearbeitung an einem Werkstück mittels des Lasermechanismus (30) durchgeführt wird, der Laserkopf (31) in der einen Richtung bewegt wird und der Transporter (60) bewirkt, dass sich das Werkstück in der schneidenden Richtung bewegt.

3. Verbundwerkstoff-Bearbeitungsmaschine nach Anspruch 1 oder 2, wobei
das eingreifende Teil (51, 151, 251) und das Eingriffsteil (52, 152, 252) in einer vertikalen Richtung angeordnet sind,
eines von dem eingreifenden Teil (51, 151, 251) und dem Eingriffsteil (52, 152, 252) in einer Richtung, entlang der sich der obere Laserrahmen (42) erstreckt, eine Nut (52b) aufweist, und
das andere von dem eingreifenden Teil (51, 151, 251) und dem Eingriffsteil (52, 152, 252) einen Vorsprung (51b) aufweist, der in dem verbundenen Zustand in die Nut (52b) eintritt.

4. Verbundwerkstoff-Bearbeitungsmaschine nach einem der Ansprüche 1 bis 3, wobei
die Steifigkeit des oberen Pressrahmens (22) höher ist als die des oberen Laserrahmens (42).

## Revendications

1. Machine d'usinage composite (100) comprenant :
un mécanisme de presse (10) qui inclut un outil de presse (15, 16) pour effectuer un usinage sur une pièce à usiner ; un châssis de presse (20) qui supporte le mécanisme de presse (10) ; un mécanisme laser (30) qui inclut une tête laser (31) pour effectuer un usinage sur une pièce à usiner ; un châssis de laser (40) qui supporte le mécanisme laser (30) ;
un dispositif de transport (60) qui transporte une pièce à usiner à la fois vers le mécanisme de presse (10) et vers le mécanisme laser (30) ; un dispositif d'entraînement (53, 153, 253) qui amène la partie d'engagement (51, 151, 251) et la partie engagée (52, 152, 252) à se déplacer l'une par rapport à l'autre ; et un dispositif de commande (70) qui commande l'entraînement du dispositif d'entraînement (53, 153, 253), dans laquelle
le châssis de presse (20) présente un châssis de presse inférieur (21), un châssis de presse supérieur (22) qui est situé au-dessus du châssis de presse inférieur (21), avec un espace de transport (K1, K2) entre eux pour une pièce à usiner transportée par le dispositif de transport (60), et qui supporte au moins une partie du mécanisme de presse (10), et un châssis de presse vertical (23) qui connecte le châssis de presse inférieur (21) et le châssis de presse supérieur (22) ;
le châssis laser (40) présente un châssis laser inférieur (41), un châssis laser supérieur (42) qui est situé au-dessus du châssis laser inférieur (41) avec un espace de transport (K1, K2) entre eux pour une pièce à usiner transportée par le dispositif de transport (60), et qui supporte une partie du mécanisme laser (30), et un châssis laser vertical (43) qui connecte le châssis laser inférieur (41) et le châssis laser supérieur (42) ;
un espace de transport (K1, K2) pour une pièce à usiner dans le châssis de presse (20) et un espace de transport (K1, K2) pour la pièce à usiner dans le châssis laser (40) communiquant entre eux ; et
le châssis laser supérieur (42) comprenant en outre un joint (50, 150, 250) qui est agencé de manière à s'étendre depuis le châssis laser vertical (43) vers le côté du châssis de presse supérieur (22) tout en étant espacé du châssis de presse supérieur (22), et qui commute entre un état connecté dans lequel une extrémité du châssis de presse supérieur (22) et le châssis laser supérieur (42) sont connectés et un état séparé dans lequel la connexion entre ceux-ci est libérée,
dans laquelle
le châssis de presse supérieur (22) et le châssis laser supérieur (42) sont agencés de sorte que leurs extrémités soient face à face,
le joint (50, 150, 250) présente une partie d'engagement (51, 151, 251) et une partie engagée (52, 152, 252) qui sont commutées entre l'état connecté et l'état séparé en se déplaçant l'une par rapport à l'autre de manière à entrer en contact ou à se séparer l'une de l'autre, et l'une de la partie d'engagement (51, 151, 251) et de la partie engagée (52, 152, 252) est prévue sur le châssis de presse supérieur (22), et l'autre est prévue sur le châssis laser supérieur (42), et
dans laquelle
le dispositif de commande (70)
amène le dispositif d'entraînement (53, 153, 253) à entraîner de manière à faire passer le joint (50, 150, 250) dans l'état connecté lorsqu'un usinage est effectué sur une pièce à usiner au moyen de la tête laser (31) du mécanisme laser (30), et
amène le dispositif d'entraînement (53, 153, 253) à entraîner de manière à faire passer le joint (50, 150, 250) dans l'état séparé lorsqu'un usinage est effectué sur une pièce à usiner au moyen de l'outil de presse (15, 16) du mécanisme de presse (10).

2. Machine d'usinage composite selon la revendication 1, dans laquelle
le mécanisme laser (30) amène la tête laser (31) à se déplacer dans une direction le long d'une direction longitudinale du châssis laser supérieur (42),
le dispositif de transport (60) amène une pièce à se déplacer dans la une direction et dans une direction d'intersection avec la une direction,
lorsqu'un usinage est effectué sur une pièce à usiner au moyen du mécanisme de presse (10), le dispositif de transport (60) amène la pièce à usiner à se déplacer dans la première direction et dans la direction d'intersection, et
lorsqu'un usinage est effectué sur une pièce à usiner au moyen du mécanisme laser (30), la tête laser (31) est déplacée dans la première direction et le dispositif de transport (60) amène la pièce à usiner à se déplacer dans la direction d'intersection.

3. Machine d'usinage composite selon la revendication 1 ou la revendication 2, dans laquelle
la partie d'engagement (51, 151, 251) et la partie engagée (52, 152, 252) sont agencées dans une direction verticale,
l'une ou l'autre de la partie d'engagement (51, 151, 251) et de la partie engagée (52, 152, 252) présente une rainure (52b) dans une direction le long de laquelle s'étend le châssis laser supérieur (42), et
L'autre de la partie d'engagement (51, 151, 251) et de la partie engagée (52, 152, 252) présente une saillie (51b) qui, à l'état connecté, pénètre la rainure (52b).

4. Machine d'usinage composite selon l'une quelconque des revendications 1 à 3, dans laquelle
la rigidité du châssis de presse supérieur (22) est supérieure à celle du châssis laser supérieur (42).
